# EUROPÄISCHE PATENTSCHRIFT

(11) **EP 2 659 169 B1**
(45) Veröffentlichungstag und Bekanntmachung des Hinweises auf die Patenterteilung: **19.11.2014**
(21) Anmeldenummer: 11802340.7
(22) Anmeldetag: 13.12.2011
(51) Int. Cl.: F16K 3/08, F16K 11/074, F16K 27/04, F16K 31/00, F16J 15/06

(54) **VENTIL ZUR STEUERUNG VON VOLUMENSTRÖMEN**
VALVE FOR CONTROLLING VOLUME FLOWS
SOUPAPE DE COMMANDE DE DÉBITS VOLUMÉTRIQUES

(30) Priorität: 29.12.2010 DE 102010064307
(43) Veröffentlichungstag der Anmeldung: 06.11.2013
(73) Patentinhaber: Robert Bosch GmbH, 70442 Stuttgart (DE)
(72) Erfinder: TAGHOUTI, Nizar, 76137 Karlsruhe (DE); HARTINGER, Markus, 67100 Strasbourg (FR); HERRMANN, Ralf, 77880 Sasbach (DE); REEB, Georg, 77815 Buehl Eisental (DE); BRANDES, Joerg, 76534 Baden-Baden (DE); MERZ, Harald, 76547 Sinzheim (DE)
(86) Internationale Anmeldenummer: PCT/EP2011/072657
(87) Internationale Veröffentlichungsnummer: WO 2012/089499

(56) Entgegenhaltungen:
- DE-A1-102006 053 307
- DE-A1-102008 029 706
- US-A1- 2003 070 714

## Beschreibung

Die Erfindung betrifft ein Ventil zur Steuerung von Volumenströmen nach der Gattung des unabhängigen Anspruchs.

### Stand der Technik

Ein Kühl- bzw. Heizkreislauf eines Kraftfahrzeuges beinhaltet in der Regel eine zu kühlende Wärmequelle, beispielsweise eine Brennkraftmaschine eines Kraftfahrzeugs, die mittels eines Kühlmediums durch freie oder erzwungene Konvektion gekühlt werden soll. Die Temperaturdifferenz über der Wärmequelle ist vom Wärmeeintrag und von der Größe des Volumenstroms des Kühlmittels abhängig, während die absolute Temperatur des Kühlmediums durch den Wärmeeintrag der Wärmequelle, die Wärmeabfuhr über etwaige, im Kühlkreislauf befindliche Kühlerelemente und die Wärmekapazitäten der beteiligten Materialien bestimmt wird. Um einerseits die Brennkraftmaschine vor dem Überhitzen zu schützen und andererseits die Abwärme der Brennkraftmaschine beispielsweise zur Beheizung des Fahrgastraumes nutzen zu können, wird im Kraftfahrzeug ein Kühlmittel umgepumpt, das die überschüssige Wärmeenergie der Brennkraftmaschine aufnimmt und in gewünschtem Maße abführt.

Der Heiz- bzw. Kühlkreislauf eines Kraftfahrzeuges umfasst in der Regel verschiedene Teilkreisläufe, wie beispielsweise einen Kühlerzweig, einen Bypass-Zweig und/oder auch einen Heizungswärmetauscherzweig. Über einen im Kühlerzweig angeordneten Kühler oder Radiator kann die überflüssige Wärmemenge des Kühlmittels an die Umgebungsluft abgegeben werden. Ein Heizungswärmetauscher macht andererseits die zur Verfügung stehende Wärmemenge des Kühlmittels zur Beheizung des Fahrgastraumes nutzbar. Die Verteilung des Kühlmittelstromes auf die verschiedenen Zweige des Kühl- bzw. Heizkreislaufes wird dabei üblicherweise durch zumindest ein Ventil gesteuert.

Hierzu wird in der DE 10 2006 053 310 A1 vorgeschlagen, die gewünschte Kühlmitteltemperatur durch das Mischen eines gekühlten und eines ungekühlten Kühlmittelstroms einzustellen. Dazu wird ein Steuerventil verwendet, dessen Durchströmöffnungen durch ein Verdrehen veränderlich sind. Um die Durchströmöffnungen zu verstellen, ist in dem Steuerventil ein Elektromotor angeordnet, der über ein Schneckengetriebe die Position einer Ventilscheibe so verstellt, dass durch das Steuerventil ein gewünschter Kühlmittelstrom strömt. Der Elektromotor ist dabei nicht vom Kühlmittelstrom getrennt, sodass die Komponenten des Elektromotors, wie etwa der Rotor und das Getriebe, mit Kühlmittel umflutet sind.

Aus der US 5, 950, 576 ist ferner ein Proportionalkühlmittelventil bekannt, dessen Ventilkörper scheibenförmig ausgebildet ist und eine Mehrzahl von Durchtrittsöffnungen aufweist, die es erlauben, die gewünschten Verbindungen zwischen dem Einlasskanal des Ventils und mehreren Auslasskanälen herzustellen. Die Ventilscheibe der US 5, 950, 576 wird mittels einer Welle über einen elektromechanischen Aktuator entsprechend den Vorgaben eines Verbrennungsmotor-Steuergerätes gestellt.

Aus der DE 10 2006 053 307 A1 ist ferner bekannt, die Öffnungen der Ventilscheibe durch Dichtelemente in Form von Dichtringen, sowie mit Federelementen, die das Dichtelement an die Ventilscheibe andrücken, zu realisieren, sodass die Leckageraten bei einem geschlossenen Kühlkreislauf nahezu Null sind.

Bei Ausfall der Versorgungsspannung ist bei den obigen Ventilen eine Verstellung der Ventilscheibe nicht mehr möglich, so dass diese keine definierte Position einnehmen kann. Daher kann es passieren, dass der Verbrennungsmotor überhitzt, weil das Ventil in einer Stellung stehen bleibt, in der nicht ausreichend Kühlmittel zirkulieren kann. Im Extremfall bleibt das Ventil in Vollabsperrung stehen, so dass keine Kühlung mehr möglich ist.

### Offenbarung der Erfindung

Es ist Aufgabe der Erfindung, ein energie- und platzsparendes Notlaufkonzept für ein Ventil mit einer um die Achse einer Welle drehbar angeordneten Ventilscheibe vorzusehen, mit dem eine Zirkulation des Kühlmittels auch bei Ausfall der Versorgungsspannung gegeben ist.

Das Ventil zur Steuerung von Volumenströmen eines Kühlmittels in einem Heiz- und/oder Kühlsystem eines Kraftfahrzeuges weist ein Ventilgehäuse mit mindestens einem Einlasskanal sowie mindestens einem Auslasskanal auf. In dem Ventilgehäuse ist mindestens eine, um die Achse einer Welle drehbar angeordnete Ventilscheibe vorhanden, die die Verbindung zwischen dem mindestens einem Einlasskanal und dem mindestens einen Auslasskanal des Ventils beeinflusst. Erfindungsgemäß ist vorgesehen, dass eine radial verschiebbare Dichtbuchse zwischen dem mindestens einen Auslasskanal und der Ventilscheibe angeordnet ist, über die der mindestens eine Einlasskanal und der mindestens eine Auslasskanal im Falle einer Überhitzung des Kühlmittels miteinander verbindbar sind. In vorteilhafter Weise ergibt sich hierdurch die Möglichkeit, einer unverzögerten Reaktion im Falle der Überhitzung, während übliche thermisch gesteuerte Einrichtungen entweder verzögert oder gar nicht auf ansteigende Temperaturen der Brennkraftmaschine reagieren, da sie thermisch nicht optimal an das System angekoppelt sind. Zudem ist ein sehr geringer Energie- und Raumbedarf für das Auslösen des Notlaufkonzepts erforderlich. Ein weiterer Vorteil der Erfindung ergibt sich durch die Ausnutzung vorhandener Bauteile für das Notlaufkonzept, so dass zum Beispiel auf einen zusätzlichen Bypass-Kanal oder ein aufwändig gestaltetes Bypass-Ventil verzichtet werden kann.

Weitere Vorteile der Erfindung ergeben sich durch die in den abhängigen Ansprüchen angegebenen Merkmale sowie aus der Zeichnung und der nachfolgenden Beschreibung.

In vorteilhafter Weise ist die Dichtbuchse durch eine Feder in radialer Richtung der Ventilscheibe vorgespannt. Weiterhin ist vorgesehen, dass die Dichtbuchse durch ein Entriegelungselement gehalten ist, das die Dichtbuchse im Falle der Überhitzung des Kühlmittels mittels eines mit dem Entriegelungselement wirkverbundenen Elektromagneten oder Thermostaten freigibt. Da die vorgespannte Dichtbuchse nur im Fehlerfall, d.h. bei Überschreiten der zulässigen Kühlmitteltemperatur, ausgelöst wird, benötigt man nur noch einen Auslösemechanismus, der einen sehr kleinen Weg und eine kleine Kraft bereitstellen muss. Der dafür notwendige Magnetkreis ist sehr klein, leicht und kostengünstig im Vergleich zu handelsüblichen Magnetventilen mit einem Verstellbereich in der Größenordnung von ca. 4 mm. Der Energiebedarf sinkt auf nahezu Null, da nur ein kurzer Auslöseimpuls notwendig ist.

In einer Weiterbildung der Erfindung ist die Dichtbuchse mittels eines mechanischen Rückstellelements, beispielsweise durch eine außerhalb des Ventilgehäuses bedienbare Rückstellschraube, wieder in ihre rastende Urspungsposition zurück verbringbar. Dadurch kann in einfacher Weise eine Reversibilät des Notlaufkonzepts erreicht werden.

### Zeichnung

Die Erfindung wird im Folgenden anhand der Figuren beispielhaft erläutert, wobei gleiche Bezugszeichen in den Figuren auf gleiche Bestandteile mit einer gleichen Funktionsweise hindeuten. Die Figuren der Zeichnung, deren Beschreibung sowie die Ansprüche enthalten zahlreiche Merkmale in Kombination.

Es zeigen
- Fig. 1: ein erstes Ausführungsbeispiel eines Ventils in einer Übersichtsdarstellung,
- Fig. 2: das Ventil gemäß Figur 1 in einer ersten Schnittdarstellung,
- Fig. 3: ein zweites Ausführungsbeispiel des Ventils gemäß Figur 1 in einer weiteren Schnittdarstellung,
- Fig. 4: eine Schnittdarstellung eines Ausführungsbeispiel des erfindungsgemäßen Notlaufkonzepts des Ventils gemäß Figur 1,
- Fig. 5: eine schematische Darstellung des Ausführungsbeispiels gemäß Fig. 4.

### Beschreibung der Ausführungsbeispiele

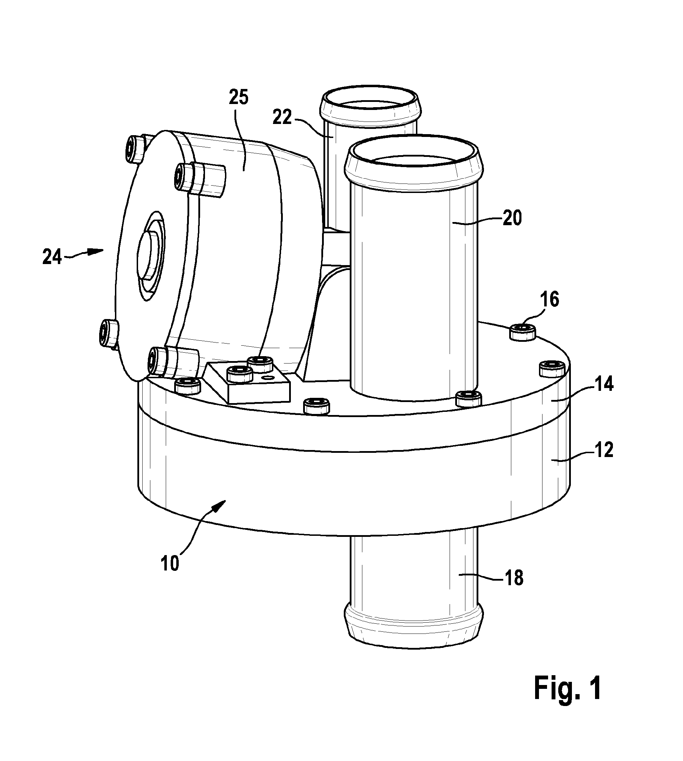

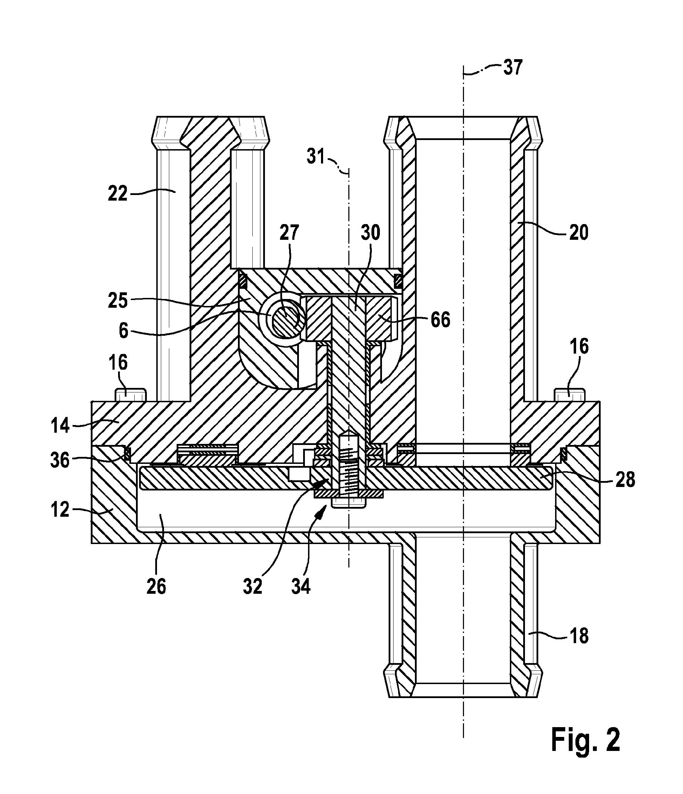

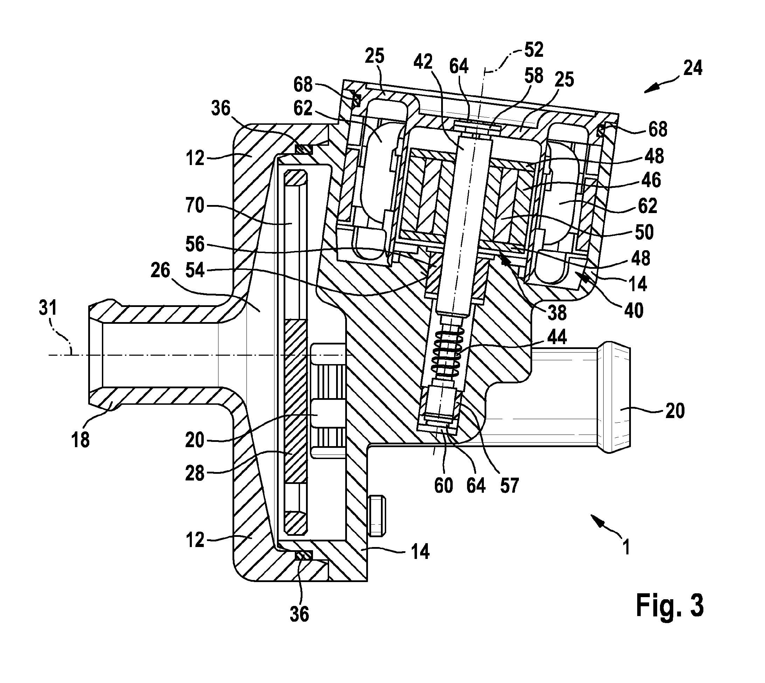

Fig. 1 zeigt ein Beispiel für ein Ventil 1 in einer Übersichtsdarstellung. Das Ventil 1 gemäß der Ausführungsform in Fig. 1 besitzt ein Gehäuse 10 mit einem Gehäuseunterteil 12 sowie einem Gehäuseoberteil 14, die über Verbindungsmittel 16, beispielsweise Schrauben, Nieten oder Rastmittel, fluiddicht miteinander verbunden sind. Insbesondere das Gehäuseunterteil 12 ist im Wesentlichen topfförmig ausgebildet, wie dies in den Figuren 2 und 3 dargestellt ist, und ermöglicht in seinem Inneren die Ausbildung einer Ventilkammer zur Aufnahme eines Ventilelementes. Das Gehäuseoberteil 14 kann ebenfalls topfförmig ausgebildet sein bzw. lediglich als eine Art Deckel im Gehäuseunterteil 12 ausgeformt sein. Am Gehäuseunterteil 12 angeformt ist der Stutzen eines Einlasskanals 18. Der Einlasskanal 18 bzw. der Stutzen kann dabei insbesondere einstückig mit dem Gehäuseunterteil 12 ausgeformt, beispielsweise in Kunststoff ausgebildet sein.

Mit dem Gehäuseoberteil 14 verbunden sind ein erster sowie ein zweiter Auslasskanal 20, 22. Mit Hilfe eines in der Ventilkammer angeordneten und noch näher zu beschreibenden Ventilelementes kann eine Verbindung zwischen dem Einlasskanal 18 und dem ersten bzw. zweiten Auslasskanal 20, 22 geöffnet, geschlossen und in gewünschter Weise variiert werden. Darüber hinaus weist das Ventil 1 noch einen Stellantrieb 24 zur Verstellung des Ventilelementes auf, der in Verbindung mit Fig. 3 noch näher beschrieben wird und der ein eigenes Antriebsgehäuse 25 aufweist, das mit dem Gehäuse 10, insbesondere dem Gehäuseoberteil 14, des Ventils 1 verschraubt ist.

Fig. 2 zeigt einen ersten Schnitt durch das Ventil 1, der in etwa senkrecht zur Zeichnungsebene der Fig. 1 verläuft. In der zwischen dem Gehäuseunterteil 12 und dem Gehäuseoberteil 14 ausgebildeten Ventilkammer 26 ist eine Ventilscheibe 28 als Ventilelement angeordnet. Eine Abtriebswelle 30 des in Fig. 3 näher dargestellten Stellantriebes 24 greift in eine zentrale Öffnung 32 der Ventilscheibe 28 ein. Durch entsprechende Sicherungsmittel 34 ist die Ventilscheibe 28 drehfest auf der Abtriebswelle 30 befestigt, so dass diese Welle auch als Antriebswelle der Ventilscheibe 28 dient. Die Sicherung der Ventilscheibe auf der Welle 30 kann beispielsweise durch eine in Fig. 2 dargestellte Verschraubung bzw. Verrastung erfolgen, oder aber auch durch ein Verpressen der Welle 30 in der zentralen Öffnung 32 der Ventilscheibe 28.

Zwischen dem Gehäuseunterteil 12 und dem Gehäuseoberteil 14 sind Dichtmittel, beispielsweise ein Dichtring 36 vorgesehen, um eine fluiddichte Verbindung zwischen den beiden Gehäuseteilen 12, 14 des Ventilgehäuses 10 zu gewährleisten. In den Ausführungsbeispielen der Figuren 1 und 2 sind der Einlasskanal 18 fluchtend auf einer gemeinsamen Achse 37 mit dem ersten Auslasskanal 20 und die Welle 30 entlang einer dazu parallel ausgerichteten Rotationsachse 31 angeordnet. Im ventilscheibenseitigen Bereich der Auslasskanäle 20, 22 sind Federdichtungen 39 angeordnet, die bei geschlossener Ventilscheibe 28 ein Übertreten von Kühlmittel aus der Ventilkammer 26 in die Auslasskanäle 20, 22 verhindern sollen.

Fig. 3 zeigt eine zweite schematische Schnittansicht des Ventils 1 in einem weiteren Ausführungsbeispiel. Die Längsachsen des Einlasskanals 18 und des Auslasskanals 20 sind hier versetzt zueinander angeordnet. In dem zweiten Gehäuse 25 ist ein Rotor 38 und ein Stator 40 des als Elektromotor ausgebildeten Stellantriebs 24 angeordnet. Der Rotor 38 weist eine Rotorwelle 42 auf, auf der in einem ersten Bereich eine Schneckenverzahnung 44 und in einem zweiten Bereich ein Blechpaket 46 angeordnet sind. Die paketierten Bleche des Blechpakets 46 umfassen dabei radial die Rotorwelle 42 und werden axial durch zwei Blechhülsen 48 begrenzt. In dem Blechpaket 46 ist zumindest ein Magnet 50 angeordnet. Das Blechpaket 46 ist in seiner räumlichen Anordnung in einer Rotorwellenachse 52 von dem Bereich der Schneckenverzahnung 44 durch eine radiale Lageraufnahme 54 und dem darin angeordneten ersten radialen Lagerelement 56 abgetrennt. Die Flächen der Rotorwelle 42, die an den radialen Lagerelementen 56, 57 und den axialen Lagerelementen 58, 60 anliegen, weisen dabei einen höheren Härtegrad als die übrigen Flächen der Rotorwelle 42 auf. Die axialen Lagerelemente 58, 60 sind plattenförmig ausgeprägt, wobei das erste axiale Lagerelement 58 in dem Antriebsgehäuse 25 und das zweite axiale Lagerelement 60 in den Gehäuseoberteil 14 angeordnet sind. Der Rotor 38 weist an den Enden der Rotorwelle 42 jeweils einen Anlaufpilz 64 auf, der zur Abstützung der Lagerkräfte auf die axialen Lagerelemente 58, 60 dient. Der Rotor 38 sowie der Stator 40, werden durch das Antriebsgehäuse 25 und ein zweites Dichtelement 68 gegenüber der Umgebung abgeschlossen.

Der Stator 40 weist zumindest eine Spule 62 mit einer Mehrzahl von Wicklungen sowie nicht dargestellte Blechpakete auf. Die Spulen 62 erzeugen bei angelegter Spannung ein Magnetfeld, welches den Rotor 38 in Rotation um die Rotorwellenachse 52 versetzt. Die Spulen 62 können hierbei mit Wechselspannung betrieben werden oder elektronisch kommutiert werden. Durch die Rotation des Rotors 38 wird über die Schneckenverzahnung 44 ein Stirnrad 66 (vergleiche Fig. 2) angetrieben, welches mit der Ventilscheibe 28 verbunden ist. Die Ventilscheibe 28 weist zumindest eine Öffnung 70 auf, wobei durch ein Verdrehen der Ventilscheibe 28 die Öffnung 70 vor den Auslasskanal 20 gedreht wird. Je nach Stellung der Öffnung 70 vor dem Auslasskanal 20 wird die Durchflussfläche der Ventilscheibe 28 reguliert. Die Öffnung 70 ist mit ihrer Längsachse zur Rotationsachse 31 der Welle 30 bzw. der Ventilscheibe 28 versetzt angeordnet.

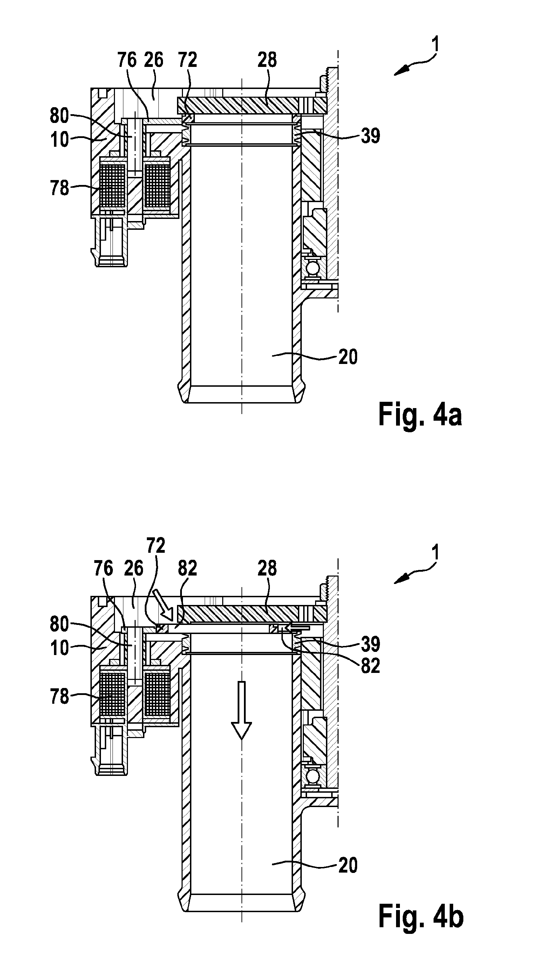

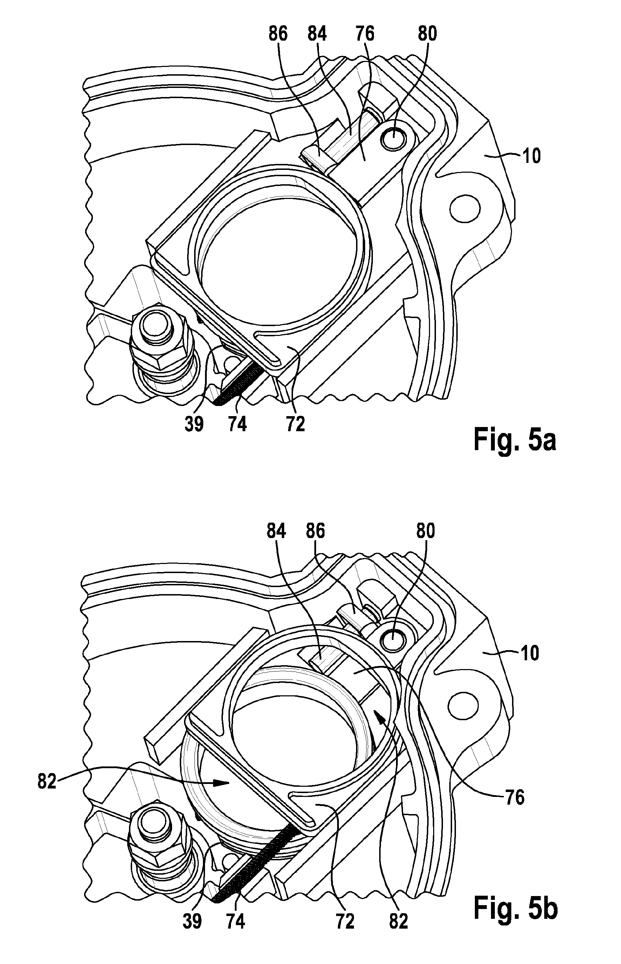

In den Figuren 4 und 5 ist das erfindungsgemäße Notlaufkonzept des Ventils 1 in einer Schnittdarstellung bzw. in einer schematischen Darstellung gezeigt. Die Figuren 4a und 5a zeigen den Normalbetrieb während in den Figuren 4b und 5b der Notlaufbetrieb dargestellt ist.

Im Normalbetrieb ist eine Dichtbuchse 72 derart zwischen der Federdichtung 39 und der Ventilscheibe 28 angeordnet, dass ihre Kontur mit den Konturen der Federdichtung 39 und/oder der Öffnung 70 der Ventilscheibe 28 deckungsgleich ist. Dadurch ist sichergestellt, dass die Kühlflüssigkeit bei geschlossenen Ventil 1 im Normalbetrieb nicht von der Ventilkammer 26 in den Auslasskanal 20 übertreten kann. Eine Feder 74 (siehe Fig. 5), beispielsweise eine Spiral- oder Blattfeder oder dergleichen, drückt die Dichtbuchse 72 gegen ein Entriegelungselement 76. Die Dichtbuchse 72 liegt damit in ihrer rastenden Urspungsposition und wird von der Ventilscheibe 28 vollkommen überdeckt. Die Dichtheit zwischen Ventilscheibe 28 und Dichtbuchse 72 ist gewährleistet.

Im Fehlerfall (vgl. Figuren 4b und 5b) wird ein Elektromagnet 78 bestromt, der mit dem Entriegelungselement 76 über einen Anker 80 in einer Wirkverbundung steht. Dadurch wird das Entriegelungselement 76 in Richtung des Elektromagneten 78 gezogen, und die Dichtbuchse 72 schiebt sich infolge der auf sie wirkenden Federkraft der Feder 74 aus der Ursprungsposition in radialer Richtung in die Notlaufposition, woraufhin ein Leckagekanal 82 zwischen der Ventilscheibe 28 und der Dichtbuchse 72 direkt zum Auslasskanal 20 freigegeben wird. Alternativ zum Elektromagneten 78 kann auch ein Thermostat, beispielsweise in Form eines Wachsaktuators, für die Entriegelung zum Einsatz kommen.

Das Rückstellen der Dichtbuchse 72 in ihre rastende Urspungsposition kann schließlich über eine mechanisch außerhalb des Ventilgehäuses 10 bedienbare Rückstellschraube 84 erfolgen. Dazu schiebt beispielsweise ein mit der Rückstellschraube 84 über ein Gewinde wirkverbundener Schuh 86 die Dichtbuchse 72 entgegen der Federkraft der Feder 74 in ihre Ursprungsposition zurück, bis das Entriegelungselement 76 die Dichtbuchse 72 wieder verriegelt. Die Verriegelung kann dabei ebenfalls über eine Federkraft oder durch kurzzeitiges, gegenpoliges Bestromen des Elektromagneten 78 erfolgen. Alternativ ist auch eine mechanische Verriegelung denkbar. Der Schuh 86 wird abschließend wieder mittels der Rückstellschraube 84 außerhalb des Bewegungsbereichs der Dichtbuchse 72 verbracht, um das Notlaufkonzept nicht zu behindern.

## Patentansprüche

1. Ventil (1) zur Steuerung von Volumenströmen eines Kühlmittels in einem Heiz- und/oder Kühlsystem eines Kraftfahrzeuges mit einem Ventilgehäuse (10, 12, 14, 25) mit mindestens einem Einlasskanal (18) sowie mindestens einem Auslasskanal (20, 22), wobei in dem Ventilgehäuse (10, 12, 14) mindestens eine um die Achse (31) einer Welle (30) drehbar angeordnete Ventilscheibe (28) vorhanden ist, die die Verbindung zwischen dem mindestens einem Einlasskanal (18) und dem mindestens einen Auslasskanal (20, 22) des Ventils (1) beeinflusst, **dadurch gekennzeichnet, dass** eine radial verschiebbare Dichtbuchse (72) zwischen dem mindestens einen Auslasskanal (20, 22) und der Ventilscheibe (28) angeordnet ist, über die der mindestens eine Einlasskanal (18) und der mindestens eine Auslasskanal (20, 22) im Falle einer Überhitzung des Kühlmittels durch radiales Verschieben der Dichtbuchse (72) miteinander verbindbar sind.

2. Ventil (1) nach Anspruch 1, **dadurch gekennzeichnet, dass** die Dichtbuchse (72) durch eine Feder (74) in radialer Richtung der Ventilscheibe (28) vorgespannt ist.

3. Ventil (1) nach einem der vorherigen Ansprüche, **dadurch gekennzeichnet, dass** die Dichtbuchse (72) durch ein Entriegelungselement (76) gehalten ist, das die Dichtbuchse (72) im Falle der Überhitzung des Kühlmittels mittels eines mit dem Entriegelungselement (76) wirkverbundenen Elektromagneten (78) oder Thermostaten freigibt.

4. Ventil (1) nach einem der vorherigen Ansprüche, **dadurch gekennzeichnet, dass** die Dichtbuchse (72) mittels eines mechanischen Rückstellelements (84, 86) wieder in ihre rastende Urspungsposition zurück verbringbar ist.

## Claims

1. Valve (1) for controlling volumetric flows of a coolant in a heating and/or cooling system of a motor vehicle having a valve housing (10, 12, 14, 25) with at least one inlet channel (18) and at least one outlet channel (20, 22), there being at least one valve plate (28) in the valve housing (10, 12, 14), which valve plate (28) is arranged such that it can be rotated about the axis (31) of a shaft (30) and influences the connection between the at least one inlet channel (18) and the at least one outlet channel (20, 22) of the valve (1), **characterized in that** a radially displaceable sealing bush (72) is arranged between the at least one outlet channel (20, 22) and the valve plate (28), via which the at least one inlet channel (18) and the at least one outlet channel (20, 22) can be connected to one another by way of radial displacement of the sealing bush (72) in the case of overheating of the coolant.

2. Valve (1) according to Claim 1, **characterized in that** the sealing bush (72) is prestressed in the radial direction of the valve plate (28) by way of a spring (74).

3. Valve (1) according to one of the preceding claims, **characterized in that** the sealing bush (72) is held by an unlocking element (76) which, in the case of overheating of the coolant, releases the sealing bush (72) by means of a thermostat or electromagnet (78) which is operatively connected to the unlocking element (76).

4. Valve (1) according to one of the preceding claims, **characterized in that** the sealing bush (72) can be moved back into its latching original position by means of a mechanical restoring element (84, 86).

## Revendications

1. Soupape (1) de commande de débits volumétriques d'un fluide de refroidissement dans un système de chauffage et/ou de refroidissement d'un véhicule automobile, comprenant un boîtier de soupape (10, 12, 14, 25) pourvu d'au moins un canal d'entrée (18) ainsi que d'au moins un canal de sortie (20, 22), au moins un disque de soupape (28) disposé de manière à pouvoir tourner autour de l'axe (31) d'un arbre (30) étant prévu dans le boîtier de soupape (10, 12, 14), lequel disque de soupape influençant la liaison entre l'au moins un canal d'entrée (18) et l'au moins un canal de sortie (20, 22) de la soupape (1), **caractérisée en ce qu'**une douille d'étanchéité (72) déplaçable radialement est disposée entre l'au moins un canal de sortie (20, 22) et le disque de soupape (28), par le biais de laquelle l'au moins un canal d'entrée (18) et l'au moins un canal de sortie (20, 22) peuvent être reliés l'un à l'autre par déplacement radial de la douille d'étanchéité (72) en cas de surchauffe du fluide de refroidissement.

2. Soupape (1) selon la revendication 1, **caractérisée en ce que** la douille d'étanchéité (72) est précontrainte par un ressort (74) dans la direction radiale du disque de soupape (28).

3. Soupape (1) selon l'une quelconque des revendications précédentes, **caractérisée en ce que** la douille d'étanchéité (72) est retenue par un élément de déverrouillage (76) qui libère la douille d'étanchéité (72), en cas de surchauffe du fluide de refroidissement, au moyen d'un électro-aimant (78) ou d'un thermostat en liaison fonctionnelle avec l'élément de déverrouillage (76).

4. Soupape (1) selon l'une quelconque des revendications précédentes, **caractérisée en ce que** la douille d'étanchéité (72) peut être ramenée à sa position initiale encliquetée au moyen d'un élément de rappel mécanique (84, 86).
